# EUROPÄISCHE PATENTSCHRIFT

(11) **EP 0 496 699 B1**
(45) Veröffentlichungstag und Bekanntmachung des Hinweises auf die Patenterteilung: **26.04.1995**
(21) Anmeldenummer: 92810025.4
(22) Anmeldetag: 16.01.1992
(51) Int. Cl.: C07F 9/572, C07F 15/00, B01J 31/24, B01J 31/00

(54) **Silangruppen enthaltende Diphosphine, immobilisierte Diphosphine und deren Verwendung als Hydrierkatalysatoren**
Diphosphines containing silane groups, immobilized diphosphines and their use as hydrogenation catalysts
Disphosphines contenant des groupes silane, diphosphines immobilisées et leur utilisation comme catalyseurs d'hydrogenation

(30) Priorität: 25.01.1991 CH 219/91
(43) Veröffentlichungstag der Anmeldung: 29.07.1992
(73) Patentinhaber: CIBA-GEIGY AG, 4002 Basel (CH)
(72) Erfinder: Pugin, Benoit, Dr., CH-4142 Münchenstein (CH); Müller, Manfred, Dr., CH-6252 Dagmersellen (CH); Spindler, Felix, Dr., CH-4656 Starrkirch-Wil (CH)

(56) Entgegenhaltungen:
- US-A- 4 424 312
- CHEMISCHE BERICHTE, Band 119, Nr. 11, 1986, Seiten 3326-3343, VCHVerlagsgesellschaft mbH, Weinheim, DE; U. NAGEL et al.: "Synthese N-substituierter (R,R)-3,4-Bis(diphenylphosphino)-pyrrolidine und Anwendung ihrerRhodiumkomplexe zur asymmetrischen Hydrierung von alpha-(Acylamino)acrylsäure- Derivaten"
- JOURNAL OF THE CHEMICAL SOCIETY, CHEMICAL COMMUNICATIONS, Nr. 14, 15. Juli1986, Seiten 1098-1099; U. NAGEL et al.: "The first stereospecific catalytichydrogenation with a polymer supported optically active rhodium complex"

## Beschreibung

Die vorliegende Erfindung betrifft Silangruppen enthaltende Pyrrolidin-Diphosphine, solche an ein festes Trägermaterial gebundene Pyrrolidin-Diphosphine und deren Verwendung in Form von Rhodium- oder Iridium-Komplexen zur Hydrierung von olefinischen Doppelbindungen und Heterodoppelbindungen, besonders zur enantioselektiven Hydrierung unter Verwendung von chiralen Pyrrolidin-Diphosphinen.

In den EP-A-0 256 982, EP-A-0 302 021 und EP-A-0 301 457 wird die enantioselektive Hydrierung von Ketiminen zu optisch aktiven sekundären Aminen mit Hilfe von chiralen Rhodium- und Iridiumdiphosphinkomplexen als homogene Katalysatoren beschrieben. Die teuren Katalysatoren können jedoch nicht oder nur mit aufwendigen Trennmethoden zurückgewonnen werden, was stets mit unerwünschten Verlusten verbunden ist. Darüber hinaus weisen diese Katalysatoren im Verlaufe der ersten Reaktion einen hohen Aktivitätsverlust auf, so dass die direkte Wiederverwendung in weiteren Hydrierverfahren mit hohen Ausbeuteverlusten verbunden und daher unwirtschaftlich ist. Es besteht ein Bedarf an leicht abtrennbaren und wiederverwendbaren Katalysatoren, wobei deren Aktivität und besonders deren Selektivität weitgehend erhalten bleiben.

K. Achiwa beschreibt im J. Chem. Japan. Soc., Chemistry Letters, Seiten 905 bis 908 (1978) Polystyrolcopolymere, deren Benzolreste mit Rhodium komplexierte Pyrrolidin-diphosphin-N-carbonylgruppen enthalten. Die Synthese der Monomeren ist schwierig und die Hydrierung von prochiralen Olefinen mit diesen heterogenen Katalysatoren ist mit einer Erniedrigung der Enantioselektivität verbunden.

U. Nagel et al. offenbaren im J. Chem. Soc., Chem. Commun., Seiten 1098-1099 heterogene Rhodium-Katalysatoren für die enantioselektive Hydrierung von α-(Acetylamino)-zimtsäure. Die Katalysatoren sind mit Rhodium komplexierte Pyrrolidin-Diphosphine, an deren N-Atom ein Triethoxysilyl-n-propyl-dicarbonsäueremonoamidrest gebunden ist, und die auf Silicagel als festem Trägermaterial aufgebracht sind. Die Synthese dieser Materialien ist sehr aufwendig. Im Vergleich zu den Monomeren werden zwar gleich gute Selektivitäten erzielt, aber der Aktivitätsverlust ist hoch und reduziert die Wiederverwendbarkeit.

Ein Gegenstand der Erfindung sind Verbindungen der Formel I 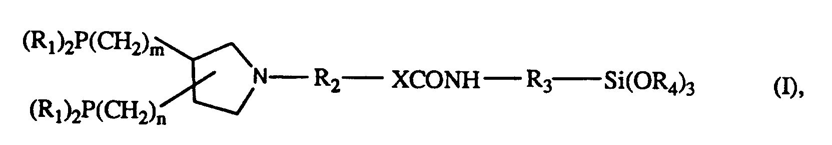
worin die Gruppen (R₁)₂P(CH₂)_{m bzw. n} in o- oder m-Stellung zueinander stehen und die R₁ gleiche oder verschiedene Reste darstellen, m und n unabhängig voneinander 0 oder 1 bedeuten, R₁ für lineares oder verzweigtes C₁-C₁₂-Alkyl, unsubstituiertes oder mit C₁-C₄-Alkyl oder C₁-C₄-Alkoxy substituiertes C₅- oder C₆-Cycloalkyl, Phenyl oder Benzyl steht, oder beide R₁ in einer Gruppe (R₁)₂P zusammen für o,o'-Diphenylen steht, -R₂-X- eine Bindung oder -(CₓH₂ₓ-O)_{y}-darstellt oder X -O- und R₂ C₁-C₆-Alkylen bedeuten, x für eine ganze Zahl von 2 bis 6 und y für eine Zahl von 2 bis 6 stehen, R₃ C₂-C₁₈-Alkylen, Phenylen oder Benzylen darstellt, und R₄ C₁-C₆-Alkyl oder Phenyl bedeutet.

In den Verbindungen der Formel I ist die Summe von m+n bevorzugt 0 oder 1.

Bevorzugt sind die R₁ einer Phosphingruppe gleiche Reste, und insbesondere bevorzugt sind alle vier R₁ gleiche Reste.

R₁ enthält als Alkyl bevorzugt 1 bis 8, besonders bevorzugt 1 bis 4 C-Atome. Beispiele für Alkyl sind Methyl, Ethyl und die Isomeren von Propyl, Butyl, Pentyl, Hexyl, Heptyl, Octyl, Nonyl, Decyl, Undecyl und Dodecyl. Als Alkyl- und Alkoxysubstituenten kommen insbesondere Methyl, Ethyl, Methoxy und Ethoxy in Frage. Beispiele für Cycloalkyl sind Cyclopentyl und Cyclohexyl. In einer besonders bevorzugten Ausführungsform bedeutet R₁ Phenyl.

In einer anderen bevorzugten Ausführungsform stellt -R₂-X- eine Bindung dar.

R₂ kann als Alkylen linear oder verzweigt sein und enthält bevorzugt 2 bis 4 und besonders bevorzugt 2 oder 3 C-Atome. Beipiele sind Methylen, Ethylen, 1,2- und 1,3-Propylen, 1,2-, 1,3- und 1,4-Butylen, Pentylen und Hexylen. Besonders bevorzugte Alkylenreste sind Ethylen und 1,2-Propylen.

In der Gruppe -(CₓH₂ₓ-O)_{y}- stehen x bevorzugt für 2, 3 oder 4 und besonders bevorzugt für 2 oder 3, und y bevorzugt für eine Zahl von 2 bis 4. Beispiele für diese Gruppe sind Polyoxaethylen mit zum Beispiel 2, 3, 4, 5 oder 6 Oxaethyleneinheiten, oder Poly-1,2-oxapropylen mit 2, 3, 4, 5 oder 6 1,2-Oxapropyleneinheiten.

R₃ kann als Alkylen linear oder verzweigt sein und enthält bevorzugt 2 bis 12 C-Atome. Beispiele sind Ethylen und die Isomeren von Propylen, Butylen, Pentylen, Hexylen, Heptylen, Octylen, Nonylen, Decylen, Undecylen, Dodecylen, Tridecylen, Tetradecylen, Hexadecylen und Octadecylen. Bevorzugt handelt es sich bei R₃ um lineares oder verzweigtes Alkylen mit 3 bis 12 C-Atomen, zum Beispiel 1,3-Propylen oder 1,11-Undecylen. In einer anderen Ausführungsform steht R₃ bevorzugt für Phenylen.

R₄ bedeutet bevorzugt C₁-C₄-Alkyl und besonders bevorzugt Methyl oder Ethyl.

Die Verbindungen der Formel I liegen bevorzugt in Form der optisch aktiven Isomeren vor, bezogen auf die Stellung der Phosphin(methyl)-Gruppen.

In einer besonders bevorzugten Ausführungsform stellen R₁ Phenyl und -R₂X- eine Bindung dar, bedeuten R₃ 1,3-Propylen und R₄ Methyl oder Ethyl, und stehen m für 1 und n für 0 und sind die Gruppen (R₁)₂P- und (R₁)₂PCH₂- in m-Stellung gebunden, oder m und n stehen je für 0 und die Gruppen (R₁)₂P- sind in o-Stellung gebunden.

Ein weiterer Gegenstand der Erfindung ist ein Verfahren zur Herstellung von Verbindungen der Formel I, das dadurch gekennzeichnet ist, dass man eine Verbindung der Formel II

(R₄O)₃Si-R₃-NCO (II),

worin R₃ und R₄ die zuvor angegebenen Bedeutungen haben, mit einer einer Verbindung der Formel III 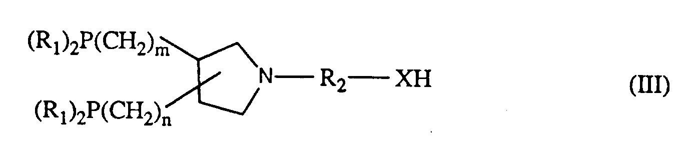
umsetzt, worin R₁, R₂, X, m und n die zuvor angegebenen Bedeutungen haben.

Die Verbindungen der Formel II sind bekannt und teilweise käuflich, oder sie können nach einem in der FR-A-1 371 405 beschriebenen Verfahren hergestellt werden. Die Verbindungen der Formel III, worin -R₂-X- eine Bindung bedeutet, sind ebenfalls bekannt oder nach bekannten Verfahren herstellbar. Solche Verfahren sind zum Beispiel von U. Nagel in Angew. Chem., 96(6), Seiten 425-426 (1984) und K. Achiwa, J. Amer. Chem. Soc., 98(25), Seiten 8265-8266 (1976) beschrieben.

Verbindungen der Formel III, worin -R₂-X- die Gruppe -(CₓH₂ₓ-O)_{y}- bedeutet, sind neu und können in einfacher Weise durch die Umsetzung von den substituierten Pyrrolidinen mit Oxiranen erhalten werden. Verbindungen der Formel III, worin X -O- und R₂ Alkylen bedeuten, können durch die Umsetzung der Pyrrolidine mit entsprechenden Halogenalkoholen oder einem Aequivalent Oxiran erhalten werden.

Die Umsetzung der Isocyante der Formel II mit den Verbindungen der Formel III kann bei Raumtemperatur oder erhöhter Temperatur, zum Beispiel 0 bis 100 °C erfolgen. Zweckmässig wird ein Lösungsmittel mitverwendet, zum Beispiel ein Kohlenwasserstoff (Petrolether, Pentan, Hexan, Cyclohexan, Methylcyclohexan, Benzol, Toluol oder Xylol) oder ein Halogenkohlenwasserstoff (Methylenchlorid, Chloroform, 1,1,2,2-Tetrachlorethan und Chlorbenzol). Die Umsetzung mit Hydroxylgruppen enthaltenden Verbindungen der Formel III erfolgt zweckmässig in Gegenwart eines Katalysators, zum Beispiel Zinnverbindungen oder tertiären organischen Aminen. Ein Ueberschuss an Isocyanat kann nach der Reaktion durch die Umsetzung mit einem Alkanol entfernt werden. Die Isolierung und Reinigung der erfindungsgemässen Verbindungen erfolgt durch übliche Methoden, zum Beispiel durch Destillation oder chromatographische Verfahren.

Bei den erfindungsgemässen Verbindungen handelt es sich im allgemeinen um ölige Flüssigkeiten, die als chirale Liganden für Iridium(I)- und Rhodium(I)-Komplexe und -Komplexsalze verwendet werden können, die ausgezeichnete homogene enantioselektive Hydrierkatalysatoren sind. Die Herstellung solcher Katalysatoren ist zum Beispiel in der EP-A-0 256 982 beschrieben. Die erfindungsgemässen Verbindungen sind besonders zur Herstellung von heterogenen und enantioselektiven Hydrierkatalysatoren geeignet, indem man die Verbindungen auf einem festen Trägermaterial fixiert.

Ein weiterer Gegenstand der Erfindung ist ein festes Trägermaterial, das an der Oberfläche chirale Diphosphin-Rhodium- oder -Iridiumkomplexe gebunden enthält, dadurch gekennzeichnet, dass es den Formeln IV und IVa entspricht, 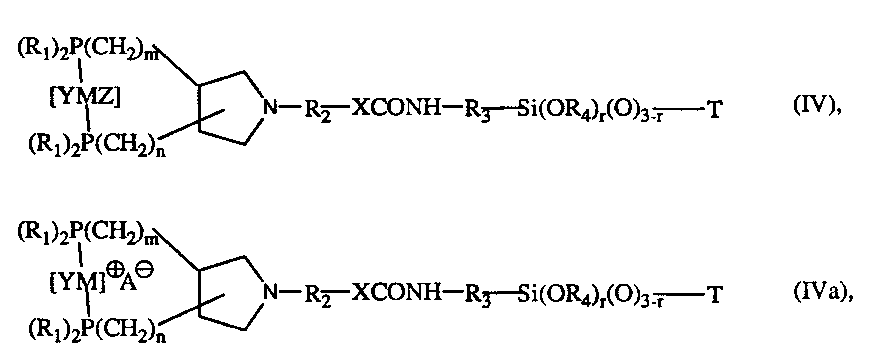
worin Y für zwei Monoolefinliganden oder einen Dienliganden steht, M Ir(I) oder Rh(I) bedeutet, Z -Cl, -Br oder -I darstellt, A^{⊖} das Anion einer Sauerstoffsäure oder Komplexsäure ist, T für ein festes Trägermaterial steht, r0, 1 oder 2 darstellt, und R₁, R₂, R₃, R₄, X, m und n die zuvor angegebenen Bedeutungen haben. Für R₁, R₂, R₃, R₄, X, m und n gelten die gleichen Bevorzugungen wie für die Verbindungen der Formel I.

Y enthält als Monoolefinligand bevorzugt 2 bis 6, besonders bevorzugt 2 bis 4 C-Atome. Beispiele sind Hexen, Penten, Buten, Propen und besonders Ethen. Y enthält als Dienligand bevorzugt 4 bis 8, besonders bevorzugt 6 bis 8 C-Atome. Es kann sich um offenkettige oder cyclische Diene handeln, deren Olefingruppen bevorzugt über ein oder zwei C-Atome verknüpft sind. Bevorzugte Diene sind 1,5-Hexadien, 1,5-Cycloactadien und Norbornadien.

In der Formel IV steht Z bevorzugt für -Cl oder -Br. A^{⊖} in Formel IVa steht bevorzugt für ClO₄^{⊖}, CF₃SO₃^{⊖}, BF₄^{⊖}, B(Phenyl)₄^{⊖}, PF₆^{⊖}, SbCl₆^{⊖}, AsF₆^{⊖} oder SbF₆^{⊖}.

Bei dem festen Trägermaterial handelt es bevorzugt um Silikate und Halbmetall- oder Metalloxide sowie um Gläser, die besonders bevorzugt als Pulver mit mittleren Teilchendurchmessern von 10 nm bis 2000 »m, bevorzugt 10 nm bis 1000 »m und insbesondere bevorzugt 10 nm bis 500 »m vorliegen. Es kann sich sowohl um kompakte als auch poröse Teilchen handeln. Poröse Teilchen weisen bevorzugt hohe innere Oberflächen auf, zum Beispiel 1 bis 1200 m², bevorzugt 30 bis 600 m². Beispiele für Oxide und Silikate sind SiO₂, TiO₂, ZrO₂, MgO, NiO, WO₃, Al₂O₃, La₂O₃), Silikagele, Tone und Zeolithe. Als festes Trägermaterial kommt auch Aktivkohle in Frage. Ferner kann das feste Trägermaterial durch Polysiloxane gebildet sein, die durch Kondensation von Verbindungen der Formel I alleine oder zusammen mit Alkoxysilanen erhältlich sind. Bevorzugte Trägermaterialien sind Silicagele, Aerosile, Aluminiumoxid, Titanoxid und deren Gemische. Ein Beispiel für Gläser als Trägermaterial ist "Controlled Pore Glass", das käuflich ist.

Das erfindungsgemäss modifizierte Trägermaterial ist erhältlich, indem man ein festes Trägermaterial, das an der Oberfläche Diphoshine gebunden enthält und das der Formel V entspricht, 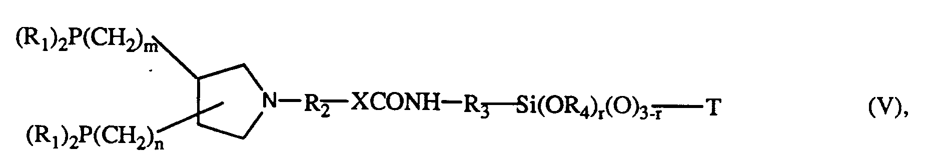
worin R₁, R₂, R₃, R₄, X, T, m, n und r die zuvor angegebenen Bedeutungen haben, mit einer Metallverbindung der Formeln [M(Y)Z]₂ oder M(Y)₂^{⊕}A^{⊖} umsetzt, worin M, Y, Z und A^{⊖} die zuvor angegebenen Bedeutungen haben.

Die Umsetzung wird vorteilhaft unter Inertgasatmosphäre, zum Beispiel Argon, und zweckmässig bei Temperaturen von 0 bis 40 °C, bevorzugt bei Raumtemperatur vorgenommen. Vorteilhaft wird ein Lösungsmittel oder Gemisch von Lösungsmitteln mitverwendet, zum Beispiel Kohlenwasserstoffe (Benzol, Toluol, Xylol), halogenierte Kohlenwasserstoffe (Methylenchlorid, Chloroform, Tetrachlorkohlenstoff, Chlorbenzol), Alkanole (Methanol, Ethanol, Ethylenglykolmonomethylether), und Ether (Diethylether, Dibutylether, Ethylenglykoldimethylether) oder Gemische davon.

Das erfindungsgemäss modifizierte Material ist auch durch die direkte Umsetzung von einem Hydroxylgruppen enthaltenden festen Material, einer Verbindung der Formel I und einer Metallverbindung der Formeln (M(Y)Z]₂ oder M(Y)₂^{⊕}A^{⊖} erhältlich. Die Reaktion kann stufenweise durch zunächst Zugabe einer Lösung der Verbindung der Formel I zum festen Material und die nachfolgende Zugabe einer Lösung der Metallverbindung erfolgen, oder man löst zunächst die Verbindungen der Formel I und die Metallverbindungen in einem Lösungsmittel und gibt diese Lösung zu dem festen Material. Hierbei können die zuvor bzw. die nachfolgend für die Herstellung des Materials der Formel V beschriebenen Reaktionsbedingungen angewendet werden. Das erfindungsgemäss modifizierte Material kann durch Filtration isoliert und durch Waschen mit Alkanolen gereinigt und im Vakuum getrocknet werden.

Das erfindungsgemäss modifizierte Material kann auch vor einer Hydrierung in situ hergestellt und dann direkt als Hydrierkatalysator eingesetzt werden.

Ein weiterer Gegenstand der Erfindung ist das der Formel V entsprechende feste Material. Es kann durch die Umsetzung von Verbindungen der Formel I mit einem Hydroxylgruppen enthaltenden festen Trägermaterial hergestellt werden, wobei vorteilhaft unter Inertgas, zum Beispiel Argon und bei einer Temperatur von 40 bis 180 °C gearbeitet wird. Zweckmässig wird das feste Material in einem Reaktionsgefäss vorgelegt, eine Lösung der Verbindung der Formel I zugegeben und die Mischung bei erhöhter Temperatur, zum Beispiel 50 bis 110 °C gerührt. Geeignete Lösungsmittel sind zuvor erwähnt worden. Zur Isolierung kann entweder abdekantiert oder filtriert werden. Der Rückstand kann durch Waschen mit einem Alkanol gereinigt und dann im Hochvakuum getrocknet werden.

Das erfindungsgemäss modifizierte Material eignet sich hervorragend als heterogener Katalysator zur enantioselektiven Hydrierung von Verbindungen mit prochiralen Kohlenstoff- und Kohlenstoff-/Heteroatomdoppelbindungen, zum Beispiel Verbindungen, die eine der Gruppen C=C, C=N, C=O, C=C-N oder C=C-O enthalten (siehe zum Beispiel K. E. König, The Applicability of Asymmetric Homogeneous Catalysis, in James D. Morrison (ed.), Asymmetric Synthesis, Vol. 5, Academic Press, 1985). Beispiele für solche Verbindungen sind prochirale Imine und Ketone. Die erfindungsgemässen Katalysatoren können nach der Reaktion in einfacher Weise, zum Beispiel durch Dekantieren oder Filtration, praktisch vollständig vom Reaktionsgemisch abgetrennt und anschliessend wiederverwendet werden. Es wird gegenüber bekannten homogenen Katalysatoren kein oder nur ein geringer Aktivitätsverlust beobachtet, der gewünschtenfalls durch die Zugabe von geringen Mengen frischen Katalysators ausgeglichen werden kann. Darüber hinaus werden gegenüber homogenen Katalysatoren vergleichbare Selektivitäten (optische Ausbeuten) erzielt. Bei der Hydrierung von N-Arylketiminen mit erfindungsgemässen Iridium-Katalysatoren wurde überraschend gefunden, dass bei vergleichbaren Selektivitäten sogar eine höhere Katalysatoraktivität und eine wesentlich geringere Desaktivierung auftritt als bei den in den EP-A-0 256 982 und EP-A-0 301 457 beschriebenen homogenen Iridium-Katalysatoren.

Ein weiterer Gegenstand der Erfindung ist die Verwendung des festen Trägermaterials der Formeln IV und IVa als heterogene Katalysatoren zur asymmetrischen Hydrierung von prochiralen Verbindungen mit Kohlenstoff- oder Kohlenstoff-/Heteroatomdoppelbindungen, besonders mit Gruppen C=C, C=N, C=O C=C-N oder C=C-O. Bevorzugt ist die Verwendung zur Hydrierung von unsymmetrischen Kohlenstoffdoppelbindungen, Ketiminen und Ketonen. Das erfindungsgemässe als Iridium-Katalysator ausgebildete feste Trägermaterial der Formeln IV und IVa wird auch bevorzugt zur Hydrierung von prochiralen N-Arylketiminen zu optisch aktiven sekundären Aminen verwendet. Das erfindungsgemässe als Rhodium-Katalysator ausgebildete feste Trägermaterial der Formeln IV und IVa wird bevorzugt zur Hydrierung von Kohlenstoffdoppelbindungen, zum Beispiel prochiralen Kohlenstoffdoppelbindungen verwendet.

Ein anderer Gegenstand der Erfindung ist ein Verfahren zur asymmetrischen Hydrierung von Verbindungen mit Kohlenstoff- oder Kohlenstoff-/Heteroatomdoppelbindungen, das dadurch gekennzeichnet ist, dass man die Verbindungen bei einer Temperatur von -20 bis 80 °C und einem Wasserstoffdruck von 10⁵ bis 10⁷ Pa in Gegenwart katalytischer Mengen eines festen Trägermaterials der Formeln IV oder IVa hydriert.

Bevorzugte Verbindungen sind zuvor erwähnt worden. Unsymmetrische Ketimine und Ketone sind bekannt. In Frage kommende N-Arylketimine sind zum Beispiel in der EP-A-0 256 982 beschrieben. N-aliphatische Ketimine sind zum Beispiel in der EP-A-0 301 457 beschrieben. Solche Imine können aus den entsprechenden unsymmetrische Ketonen hergestellt werden, die bekannt und teilweise käuflich oder nach bekannten Verfahren herstellbar sind. Geeignete, gegebenenfalls substituierte Alkene sind in der zuvor erwähnten Publikation von K. E. König beschrieben.

Das Verfahren wird bevorzugt bei einer Temperatur von -20 bis 50 °C und bevorzugt bei einem Wasserstoffdruck von 1·10⁵ bis 6·10⁶ Pa durchgeführt.

Die Menge des Katalysators wird bevorzugt so gewählt, dass das Molverhältnis der zu hydrierenden Verbindung zu dem auf dem festen Trägermaterial fixierten aktiven Katalysatorbestandteil bevorzugt 2000 bis 40, besonders bevorzugt 800 bis 50 beträgt.

Eine bevorzugte Verfahrensdurchführung ist dadurch gekennzeichnet, dass man zusätzlich ein Ammonium- oder Alkalimetallchlorid, -bromid oder -iodid mitverwendet, besonders bei der Verwendung erfindungsgemässer Iridium-Katalysatoren. Die Menge kann beispielsweise 0,1 bis 100, bevorzugt 1 bis 50 und besonders bevorzugt 2 bis 20 Aequivalente betragen, bezogen auf den auf dem Träger fixierten aktiven Katalysatorbestandteil. Der Zusatz von Iodiden ist bevorzugt. Ammonium ist bevorzugt Tetraalkylammonium mit 1 bis 6 C-Atomen in den Alkylgruppen, und als Alkalimetall ist Lithium, Natrium und Kalium bevorzugt.

Die Hydrierung kann ohne oder in Gegenwart von Lösungsmitteln durchgeführt werden. Geeignete Lösungsmittel, die alleine oder als Mischung von Lösungsmitteln eingesetzt werden können, sind zum Beispiel: Aliphatische und aromatische Kohlenwasserstoffe (Pentan, Hexan, Cyclohexan, Methylcyclohexan, Benzol, Toluol, Xylol), Alkohole (Methanol, Propanol, Butanol, Ethylenglykolmonomethylether), Ether (Diethylether, Diethylenglykoldimethylether, Tetrahydrofuran, Dioxan), Halogenkohlenwasserstoffe (Methylenchlorid, Chloroform, 1,1,2,2-Tetrachlorethan, Chlorbenzol), Carbonsäureester und Lactone (Essigsäureethylester, Butyrolacton, Valerolacton), N-substituierte Säureamide und Lactame (Dimethylformamid, N-Methylpyrrolidin). Vorteilhaft sind Mischungen aus einem aromatischen Kohlenwasserstoff und Alkoholen, zum Beispiel Toluol/Ethanol oder Benzol/Methanol.

Mit dem erfindungsgemässen Hydrierverfahren können optisch reine Verbindungen erhalten werden, die wertvolle Zwischenprodukte zur Herstellung biologisch aktiver Wirkstoffe besonders im Bereich der Pharmazeutika und Agrarchemikalien darstellen. So können zum Beispiel aus sekundären Aminen, besonders N-Carbalkoxymethylaminen, 5-Imidazolcarbonsäurederivate hergestellt werden, die eine herbizide Wirkung haben und zur Bekämpfung von Unkräutern verwendet werden können (EP-A-0 207 563). Die optisch reinen α-Aminocarbonsäureester sind für Peptidsynthesen geeignet.

Die nachfolgenden Beispiele erläutern die Erfindung näher. Die Reaktionen werden unter Argonatmosphäre durchgeführt. Die NMR-Spektren werden mit einem 250 MHz-Gerät aufgenommen.

### A) Herstellung von Ausgangsprodukten

Beispiel A1: (2S,4S)-N-[(1'-Triethoxysilylprop-3'-yl)-aminocarbonyl]-2-(diphenyl)phosphinmethyl-4-diphenylphosphin-pyrrolidin.
505 mg (1,11 mmol) (2S,4S)-2-(Diphenylphosphin)-4-(diphenylphosphin)methyl-pyrrolidin (PPM) werden in einem Rundkolben in 10 ml Toluol gelöst. Dann werden 306 mg (1,2 mmol) 1-Triethoxysilyl-3-isocyanato-propan zugetropft und die Lösung während 60 Minuten bei 44 °C gerührt. Nach dem Abkühlen wird das Lösungsmittel bei 40 °C am Rotationsverdampfer entfernt und anschliessend noch 3 Stunden im Hochvakuum belassen. Man erhält 870 mg eines leicht gelblichen zähflüssigen Oels, das noch etwas Toluol enthält. Das Rohprodukt kann direkt in den Folgeumsetzungen eingesetzt werden. Die Reinigung erfolgt durch Säulenchromatographie (Kieselgel Merck 60, Laufmittel Diethylether). Massenspektrum: 700 (M⁺). ³¹P-NMR (CDCl₃): -8,79 (s), -22,90(s). ¹H-NMR (CDCl₃): 4,08 (t, 1H, NHCO).

Beispiel A2: (2S,4S)-N-[(1'-Triethoxysilylundec-11'-yl)-aminocarbonyl]-2-(diphenylphosphin)methyl-4-diphenylphosphin-pyrrolidin.
Zu einer Lösung von 505 mg (1,11 mmol) PPM in 5 ml trockenem Methylenchlorid werden 420 mg (1,17 mmol) 1-Triethoxysilyl-11-isocyanato-undecan zugegeben und das Gemisch während 20 Stunden bei Raumtemperatur gerührt. Die Lösung wird direkt auf eine Säule (Kieselgel Merck 60) aufgetragen und chromatographiert (Laufmittel Diethylether). Nach dem Einengen der Fraktionen bei 40 °C im Vakuum am Rotationsverdampfer und dem Trocknen im Hochvakuum erhält man 860 mg (95 %) eines farblosen Oels. Massenspektrum: 812 (M⁺). ³¹P-NMR (CDCl₃): -8,78(s), -22,92(s).

Beispiel A3: (3R,4R)-N-[(1'-Triethoxysilylprop-3'-yl)-aminocarbonyl]-3,4-bis-(diphenylphosphin)-pyrrolidin.
Zu einer Lösung von 790 mg (1,8 mmol) (3R,4R)-3,4-Bis-(diphenylphosphin)-pyrrolidin in 5 ml trockenem Methylenchlorid wird eine Lösung von 494 mg (2 mmol) 1-Triethoxysilyl-3-isocyanato-propan in 5 ml Methylenchlorid zugetropft und das Gemisch 20 Stunden bei Raumtemperatur gerührt Danach wird im Vakuum am Rotationsverdampfer das Lösungsmittel entfernt und anschliessend im Hochvakuum getrocknet. Das viskose Oel wird mit 10 ml Hexan verrührt, der gebildete weisse Niederschlag abfiltriert, mit Hexan gewaschen und im Hochvakuum getrocknet. Ausbeute 95 %. ³¹P-NMR (CDCl₃): -11,7(s). ¹H-NMR (CDCl₃): 3,16 (m, 2H, CH₂NH).

Beispiel A4: (3R,4R)-N-[(1'-Triethoxysilylundec-11'-yl)-aminocarbonyl]-3,4-bis(diphenylphosphin)-pyrrolidin.
Zu einer Lösung von 1011 mg (2,3 mmol) (3R,4R)-Bis-(dipenylphosphin)-pyrrolidin in 5 ml trockenem Methylenchlorid werden 870 mg (2,42 mmol) 1-Triethoxysilyl-11-isocyanato- undecan zugetropft und das Gemisch 20 Stunden bei Raumtemperatur gerührt. Danach wird das Gemisch direkt auf eine Säule (Kieselgel Merck 60) aufgetragen und chromatographiert (Laufmittel Diethylether). Das Lösungsmittel der Fraktionen wird im Vakuum bei 40 °C am Rotationsverdampfer entfernt und der Rückstand im Hochvakuum getrocknet. Man erhält 1.57 g (79 %) eines farblosen Oels. ³¹P-NMR (CDCl₃): -11,66(s). ¹H-NMR (CDCl₃): 3,16 (m, 2H, CH₂NH).

### B) Herstellung von Trägermaterialien mit fixierten Liganden.

Beispiel B1: Verbindung A1 auf Silikagel.
2,5 g Silikagel (Merck 100) werden in einem Rundkolben unter Rühren bei 130 °C im Hochvakuum getrocknet und dann unter Argon auf Raumtemperatur abgekühlt. Danach wird eine Lösung von 260 mg Verbindung A1 in 15 ml trockenem und entgasten Toluol zugegeben und während 5,5 Stunden bei 70 °C langsam gerührt. Man lässt abkühlen und saugt die überstehende Lösung vom Silikagel ab. Man wäscht fünfmal mit entgastem Methanol und trocknet anschliessend bei 30 °C im Hochvakuum. Durch Elementaranalyse wird ein Phosphorgehalt von 0,69 % ermittelt, was 111 »mol fixierter Verbindung A1 pro g Silikagel entspricht.

Beispiel B2: Verbindung A3 auf Silikagel.
3 g Silikagel (Merck 100) werden in einem Rundkolben unter Rühren bei 130 °C im Hochvakuum getrocknet und dann unter Argon auf Raumtemperatur abgekühlt. Danach wird eine Lösung von 295 mg Verbindung A3 in 19 ml trockenem Toluol zugegeben und während 4 Stunden bei 70 °C langsam gerührt. Man lässt abkühlen und saugt die überstehende Lösung vom Silikagel ab. Man wäscht fünfmal mit je 20 ml entgastem Methanol und trocknet anschliessend im Hochvakuum. Durch Elementaranalyse wird ein Phosphorgehalt von 0,55 % ermittelt, entsprechend 88,7 »mol fixierte Verbindung A3 pro g Silikagel.

Beispiel B3: Verbindung A4 auf Silikagel.
Es wird wie in Beispiel B2 verfahren, aber die Verbindung A4 eingesetzt. Durch Elementaranalyse wird ein Phosphorgehalt von 0,3 % ermittelt, entsprechend 48 »mol fixierte Verbindung A4 pro g Silikagel.

Beispiel B4: Verbindung A1 auf Silikagel (hohe Ligand-Belegung).
1,5 g Silikagel (Merck 100) werden in einem 50 ml Schlenk unter Rühren bei 130 °C im Hochvakuum getrocknet und dann unter Argon auf Raumtemperatur abgekühlt. Danach wird eine Lösung von 407 mg (0,581 mMol) der Verbindung A1 in 7,5 ml trockenem und entgastem Toluol zugegeben und während 16 Stunden bei 90 °C langsam gerührt. Man lässt abkühlen und saugt die überstehende Lösung vom Silikagel ab. Man wäscht 5 mal mit entgastem Methanol und trocknet anschliessend mit 30 °C im Hochvakuum. Durch Elementaranalyse wird ein Phosphorgehalt von 1,27 % ermittelt, was 204 »mol fixierter Verbindung A1 pro g Silikagel entspricht.

### C) Herstellung von Katalysatoren.

Beispiel C1: Rhodium-Katalysator mit Verbindung A1 auf Aerosil.
0,7 g Aerosil (MOX 170, Degussa) werden in einem Rundkolben mehrfach mit Argon im Hochvakuum entgast und unter Argonatmosphäre gesetzt. In einem zweiten Kolben werden 58,9 mg (0,084 mmol) Verbindung A1 und 17,3 mg (0,035 mmol) [Rh(Cyclooctadien)Cl]₂ mehrmals mit Argon im Hochvakuum entgast und unter Argon mit 20 ml trockenem Toluol versetzt. Die Lösung wird zum Aerosil gegeben und das Gemisch während 5,5 Stunden bei 60 °C langsam gerührt. Nach dem Abkühlen wird das Gemisch zentrifugiert und die überstehende Lösung abgezogen. Der Rückstand wird fünfmal mit je 8 ml Methanol gewaschen und dann im Hochvakuum bei 30 °c getrocknet. Durch Elementaranalyse wird ein Phosphorgehalt von 0,75 % und ein Rhodiumgehalt von 0,95 % ermittelt, entsprechend 121 »mol fixierter Verbindung A1 pro g Aerosil und 92 »mol Rhodium-Komplex pro g Aerosil.

Beispiel C2: Rhodium-Katalysator mit Verbindung A3 auf Silikagel.
1,3 g Silikagel (Merck 100) werden in einem Rundkolben unter Rühren bei 130 °C während 3 Stunden getrocknet und dann unter Argon gesetzt und auf Raumtemperatur abgekühlt. In einem zweiten Kolben werden 118 mg (0,172 mmol) Verbindung A3 und 54 mg (0,143 mmol) Rh(Norbornadien)₂BF₄ mehrmals mit Argon im Hochvakuum entgast und mit 8 ml trockenem Toluol und 1 ml trockenem Methanol gelöst. Die Lösung wird zum Silikagel gegeben und das Gemisch während 4,5 Stunden bei 55 °C langsam gerührt. Nach dem Abkühlen lässt man absetzen und zieht die überstehende Lösung ab. Der Rückstand wird fünfmal mit je 5 ml Methanol gewaschen und dann bei 30 °C im Hochvakuum getrocknet. Durch Elementaranalyse wird ein Phosphorgehalt von 0,75 % und ein Rhodiumgehalt von 0,95 % ermittelt, entsprechend 121 »mol fixierter Verbindung A3 pro g Silikagel und 92 »mol Rhodium-Komplex pro g Silikagel.

Beispiel C3: Rhodium-Katalysator mit Verbindung A3 auf Silikagel.
Es wird wie in Beispiel C2 verfahren, aber als Lösungsmittel nur 8 ml Methanol verwendet. Durch Elementaranalyse wird ein Phosphorgehalt vo 0,33 % und ein Rhodiumgehalt von 0,45 % ermittelt, entsprechend 53 »mol fixierter Verbindung A3 pro g Silikagel und 44 »mol Rhodium-Komplex pro g Silikagel.

### D) Anwendungsbeispiele

Beispiel D1: Hydrierung von (Z)-Acetamidozimtsäuremethylester mit Rhodium-Katalysator C2. 44,4 mg (4,1 »mol) Rhodium-Komplex C2 werden in ein Schlenkgefäss eingewogen und unter Argon mit einer Lösung von 4,1 mmol (Z)-Acetamidozimtsäuremethylester in 13,5 ml Methanol versetzt. Das Gemisch wird mit Hilfe einer Kapillare mit Argon in einen 50 ml Stahlautoklaven gepresst. Es wird dreimal Wasserstoff aufgepresst und entspannt und dann ein Wasserstoffdruck von 5,8·10⁶ Pa eingestellt. Die Hydrierung wird durch Einschalten des Rührers gestartet. Der Umsatz wird durch den Druckabfall und gaschromatographisch bestimmt. Der Umsatz beträgt nach 85 Minuten 100 %, der Enantiomerenüberschuss (ee) 85,8 %.
Die Reaktionslösung wird unter Argon mit einer Spritze abgezogen, der eine Membran vorgeschalten ist. Der sich auf der Membran befindende Katalysator wird anschliessend mit einer neuen Reaktionslösung (4,1 mmol (Z)-Acetamidozimtsäuremethylester in 13,5 ml Methanol) in den Autoklaven zurückgespült und unter gleichen Bedingungen hydriert. Der Umsatz beträgt nach 210 Minuten 100 %, ee 84,3 %.

Beispiel D2: Hydrierung von (Z)-Acetamidozimtsäuremethylester mit Rhodium-Katalysator C3. Es wird wie in Beispiel D1 verfahren, 32 »mol Rhodiumkatalysator C3 und 3,25 mmol (Z)-Acetamidozimtsäuremethylester in 11 ml Methanol eingesetzt. Der Umsatz beträgt nach 60 Minuten 100 %, ee 86,6 %.
Wiederverwendung des Katalysators gemäss Beispiel D1: Der Umsatz beträgt nach 94 Minuten 100 %, ee 86,7 %.

Beispiel D3: In situ Herstellung des Katalysators.
169 mg (18,8 »mol) Trägermaterial gemäss Beispiel B1 werden unter Argon in einem Rundkolben mit 5,3 ml Tetrahydrofuran versetz. In einem anderen Rundkolben werden 13,4 »mol Rh(Norbornadien)₂BF₄ in 2,7 ml entgastem Methanol gelöst. Man vereinigt beide Mischungen und rührt, bis die Lösung entfärbt ist. Anschliessend lässt man zu diesem Gemisch eine Lösung von 2,69 mmol (Z)-Acetamidozimtsäuremethylester in 16 ml Methanol zutropfen, evakuiert und spült dreimal mit Wasserstoff und stellt dann einen Wasserstoffdruck von 10⁵ Pa ein. Danach wird kräftig gerührt. Der Umsatz beträgt nach 32 Minuten 99,9 %, ee 93,5 %. Wiederverwendung des Katalysators: Die Reaktionslösung wird vom abgesetzten Katalysator abgezogen und dann eine Lösung von 2,69 mmol (Z)-Acetamidozimtsäuremethylester zugegeben. Danach stellt man einen Wasserstoffdruck von 10⁵ Pa ein und rührt kräftig. Der Umsatz beträgt nach 16 Minuten 100 %, ee 94,8 %.

Beispiel D4: In situ Herstellung des Katalysators.
150 mg (17 »mol) Trägermaterial gemäss Beispiel B1 werden unter Argon in einen Rundkolben gegeben und in einem zweiten Rundkolben werden 6,8 »mol [Rh(Cyclooctadien)Cl]₂ unter Argon in 2,5 ml Toluol gelöst und dann in den ersten Rundkolben getropft. Danach rührt man bis zur zur Entfärbung der Lösung und lässt eine Lösung von 2,72 mmol (Z)-Acetamidozimtsäuremethylester in 22 ml Ethanol zutropfen. Man evakuiert und spült dreimal mit Wasserstoff und stellt dann einen Wasserstoffdruck von 10⁵ Pa ein. Danach wird kräftig gerührt. Der Umsatz beträgt nach 75 Minuten 99,6 %, ee 85 %.
Wiederverwendung des Katalysators: Die Reaktionslösung wird vom abgesetzten Katalysator abgezogen und dann eine Lösung von 2,72 mmol (Z)-Acetamidozimtsäuremethylester zugegeben. Man hydriert wie zuvor unter 10⁵ Pa Wasserstoffdruck. Der Umsatz beträgt nach 32 Minuten 99 %, ee 82,5%.

Beispiel D5: In situ Herstellung des Katalysators.
53,1 mg (4,7 »mol) Trägermaterial gemäss Beispiel B2 werden unter Argon in einen Rundkolben eingewogen und in einem zweiten Rundkolben werden 3,9 »mol [Rh(Norbornadien)₂]BF₄ unter Argon in 1,5 ml Methanol gelöst und dann in den ersten Rundkolben getropft. Danach rührt man bis zur Entfärbung der Lösung. Zu dem Gemisch gibt man unter Argon eine Lösung von 4 mmol (Z)-Acetamidozimtsäuremethylester in 12 ml Methanol und presst das Gemisch in einen 50 ml Stahlautoklaven. Man entspannt und presst dreimal Wasserstoff mit einem Druck von 5·10⁶ Pa auf und stellt schliesslich einen Wasserstoffdruck von 5,8·10⁶ Pa ein. Anschliessend wird kräftig gerührt. Der Umsatz beträgt nach 40 Minuten 100%, ee 88 %.
Wiederverwendung des Katalysators: Die Reaktionslösung wird über eine Membran abgezogen und der Katalysator mit einer Lösung von 4 mmol (Z)-Acetamidozimtsäuremethylester in 12 ml Methanol in den Autoklaven zurückgespült. Dann hydriert man wie zuvor beschrieben. Der Umsatz beträgt nach 78 Minuten 100 %, ee 87,3%.

Beispiel D6: In situ Herstellung des Katalysators.
Es wird wie in Beispiel D4 verfahren, aber 2,9 »mol Trägermaterial gemäss Beispiel B3, 2,4 »mol [Rh(Norbornadien)₂]BF₄ in 0,9 ml Methanol und 4,8 mmol (Z)-Acetamidozimtsäuremethylester in 14,3 ml Methanol verwendet. Der Umsatz beträgt nach 95 Minuten 100 %, ee 85,5%. Wiederverwendung des Katalysators: Es wird wie in Beispiel D4 verfahren, aber 5,17 mmol (Z)-Acetamidozimtsäuremethylester in 15,5 ml Methanol verwendet. Der Umsatz beträgt nach 230 Minuten 100 %, ee 88 %.

In den Beispielen D1 bis D6 wird der Umsatz durch den Druckabfall und gaschromatographisch bestimmt (Säule SE 54,15 m). Der Enantiomerenüberschuss (ee) wird gaschromatographisch bestimmt (Säule Chirasil-1-Val, 50 m).

Beispiel D7: Hydrierung mit Iridium-Katalysator.
10,5 »mol [Ir(Cyclooctadien)Cl]₂, 26,3 »mol Trägermaterial gemäss Beispiel B1 und 42 »mol Tetra-n-butylammoniumiodid/ werden zusammen mit 6,2 ml Methanol und 6,2 ml Benzol unter Argon in einen Rundkolben gegeben und bis zur Entfärbung der Lösung gerührt. Dann lässt man eine Lösung von 2,01 g (10,5 mmol) N-(2,6-Dimethylphen-1-yl)-methoxymethyl-methyl-ketimin zutropfen und presst das Gemisch in einen 50 ml Stahlautoklaven. Dann wird dreimal evakuiert und Wasserstoff aufgepresst und schliesslich ein Wasserstoffdrück von 4·10⁶ Pa eingestellt. Danach rührt man bei 30 °C und verfolgt den Verlauf der Hydrierung über den Druckabfall. Der Umsatz wird gaschromatographisch bestimmt. Der Katalysator wird abfiltriert und anschliessend von der Reaktionslösung das Lösungsmittel im Vakuum am Rotationsverdampfer entfernt. Das Rohprodukt wird durch Flash-Chromatograpie (Silikagel, Hexan/Essigsäuremethylester 1:1) gereinigt und der Enantiomerenüberschuss polarometrisch bestimmt (Drehwert des (S)-Enantiomer [α]₃₆₅ bei 20°C-130,5°, c=3 in Hexan). Der Umsatz beträgt nach 19 Stunden 96,5 %, ee 62,7 %. Wiederverwendung des Katalysators: Vom Reaktionsgemisch wird die überstehende Lösung vom abgesetzten Katalysator abgetrennt, die gleiche Menge Ketimin wie zuvor zugegeben und wie zuvor beschrieben verfahren. Der Umsatz beträgt nach 35 Stunden 100 %, ee 61,1 %.

Beispiel D8: Hydrierung mit Iridium-Katalysator.
Es wird wie in Beispiel D7 verfahren, aber das Trägermaterial von Beispiel B2 verwendet und ein Wasserstoffdruck von 9·10⁶ Pa eingestellt. Der Umsatz beträgt nach 6 Stunden 100 %, ee 29,1 %.

Beispiel D9: Hydrierung mit in situ hergestelltem Rhodium-Katalysator.
78,6 mg (0,016 mmol) Trägermaterial gemäss Beispiel B4 werden unter Argon in einen Rundkolben eingewogen und in einem zweiten Kolben werden 0,0125 mmol [Rh(Cyclooctadien)₂]BF₄ unter Argon in 1 ml MeOH gelöst und dann in den ersten Rundkolben getropft. Danach rührt man bis zur Entfärbung der Lösung. Zu diesem Gemisch gibt man unter Argon eine Lösung von 2,5 mmol (Z)-Acetamidozimtsäuremethylester in 17,5 ml Methanol und 4 ml Tetrahydrofuran, evakuiert und spült dreimal mit Wasserstoff und stellt den Wasserstoffdruck auf 10⁵ Pa ein. Danach wird kräftig gerührt. Der Umsatz beträgt nach 28 Minuten 100%, ee 91,9 %.
Wiederverwendung des Katalysators: Die Reaktionslösung wird vom abgesetzten Katalysator abgezogen. Dann wird eine Lösung von 2,5 mmol (Z)-Acetamidozimtsäuremethylester in 17,5 ml Methanol und 5 ml Tetrahydrofuran zugegeben, das Gemisch wieder dreimal evakuiert und mit Wasserstoff gespült, der Wasserstoffdruck auf 10⁵ Pa eingestellt und schliesslich kräftig gerührt. Der Umsatz beträgt nach 15 Minuten 100 %, ee 93,1 %.

## Patentansprüche

1. Verbindungen der Formel I 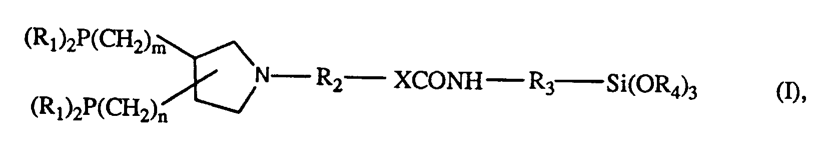 worin die Gruppen (R₁)₂P(CH₂)_{m bzw. n} in o- oder m-Stellung zueinander stehen und die R₁ gleiche oder verschiedene Reste Dastellen, m und n unabhängig voneinander 0 oder 1 bedeuten, R₁ für lineares oder verzweigtes C₁-C₁₂-Alkyl, unsubstituiertes oder mit C₁-C₄-Alkyl oder C₁-C₄-Alkoxy substituiertes C₅- oder C₆-Cycloalkyl, Phenyl oder Benzyl steht, oder beide R₁ in einer Gruppe (R₁)₂P zusammenfür o,o'-Diphenylen steht, -R₂-X- eine Bindung oder -(CₓH₂ₓ-O)_{y}- darstellt oder X -O- und R₂ C₁-C₆-Alkylen bedeuten, x für eine ganze Zähl von 2 bis 6 und y für eine Zahl von 2 bis 6 stehen, R₃ C₂-C₁₈-Alkylen, Phenylen oder Benzylen darstellt, und R₄ C₁-C₆-Alkyl oder Phenyl bedeutet.

2. Verbindungen gemäss Anspruch 1, worin in Formel I die Summe von m+n 0 oder 1 ist.

3. Verbindungen gemäss Anspruch 1, worin R₁ in Formel I für Phenyl steht.

4. Verbindungen gemäss Anspruch 1, worin in Formel I -R₂-X- für eine Bindung steht.

5. Verbindungen gemäss Anspruch 1, worin in Formel I R₃ lineares oder verzweigtes C₂-C₁₂-Alkylen darstellt.

6. Verbindungen gemäss Anspruch 1, worin in Formel I R₄ Methyl oder Ethyl bedeutet.

7. Verbindungen gemäss Anspruch 1, dadurch gekennzeichnet, dass sie in Form der optisch aktiven Isomeren vorliegen, bezogen auf die Stellung der Phosphin(methyl)-Gruppen.

8. Verbindungen gemäss Anspruch 1, worin in Formel I R₁ Phenyl und -R₂X- eine Bindung darstellen, R₃ 1,3-Propylen und R₄ Methyl oder Ethyl bedeuten, m für 0 und n für 1 stehen und die Gruppen (R₁)₂P- und (R₁)₂PCH₂- in m-Stellung gebunden sind, oder m und n für 0 stehen und die Gruppen (R₁)₂P- in o-Stellung gebunden sind.

9. Verfahren zur Herstellung von Verbindungen der Formel I nach Anspruch 1, dadurch gekennzeichnet, dass man eine Verbindung der Formel II
(R₄O)₃Si-R₃-NCO (II),
worin R₃ und R₄ die in Anspruch 1 angegebenen Bedeutungen haben, mit einer einer Verbindung der Formel III 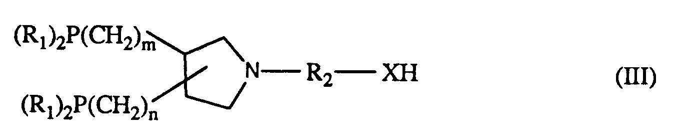 umsetzt, worin R₁, R₂, X, m und n die in Anspruch 1 angegebenen Bedeutungen haben.

10. Festes Trägermaterial, das an der Oberfläche chirale Diphosphin-Rhodium- oder -Iridiumkomplexe gebunden enthält, dadurch gekennzeichnet, dass es den Formeln IV und IVa entspricht, 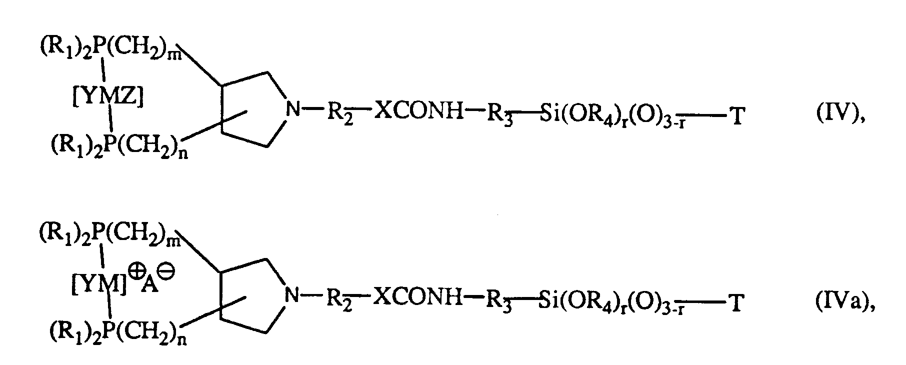 worin Y für zwei Monoolefinliganden oder einen Dienliganden steht, M Ir(I) oder Rh(I) bedeutet, Z -Cl, -Br oder -I darstellt, A^{⊖} das Anion einer Sauerstoffsäure oder Komplexsäure ist, T für ein festes Trägermaterial steht, r 0, 1 oder 2 darstellt, und R₁, R₂, R₃, R₄, X, m und n die in Anspruch 1 angegebenen Bedeutungen haben.

11. Trägermaterial gemäss Anspruch 10, worin Y in den Formeln IV und IVa für 1,5-Hexadien, 1,5-Cyclooctadien oder Norbornadien steht.

12. Trägermaterial gemäss Anspruch 10, worin Z in Formel IV für -Cl oder -Br steht.

13. Trägermaterial gemäss Anspruch 10, worin A^{⊖} in Formel IVa für ClO₄^{⊖}, CF₃SO₃^{⊖}, BF₄^{⊖}, B(Phenyl)₄^{⊖}, PF₆^{⊖}, SbCl₆^{⊖}, AsF₆^{⊖} oder SbF₆^{⊖} steht.

14. Trägermaterial gemäss Anspruch 10, worin es sich bei dem Träger um ein Silikat oder ein Halbmetall- oder Metalloxid handelt.

15. Trägermaterial gemäss Anspruch 14, dadurch gekennzeichnet, dass es sich um Pulver handelt.

16. Trägermaterial gemäss Anspruch 14, dadurch gekennzeichnet, dass es sich bei dem Träger T in den Formeln IV und IVa um ein Silikagel, ein Aerosil, ein Aluminiumoxid, ein Titanoxid oder Gemische davon handelt.

17. Verfahren zur Herstellung eines festen Trägermaterials der Formeln IV und IVa gemäss Anspruch 10, dadurch gekennzeichnet, dass man ein festes Trägermaterial, das an der Oberfläche Diphosphine gebunden enthält und das der Formel V entspricht, 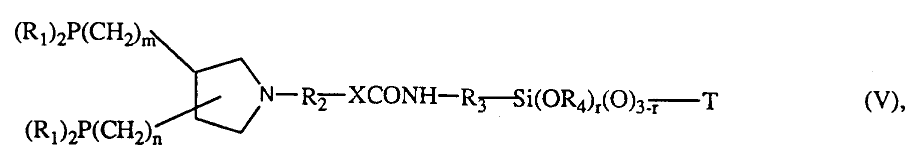 worin R₁, R₂, R₃, R₄, X, T, m, n und r die in Anspruch 9 angegebenen Bedeutungen haben, mit einer Metallverbindung der Formeln [M(Y)Z]₂ oder M(Y)₂^{⊕}A^{⊖} umsetzt, worin M, Y, Z und A^{⊖} die in Anspruch 10 angegebenen Bedeutungen haben.

18. Festes modifiziertes Trägermaterial der Formel V 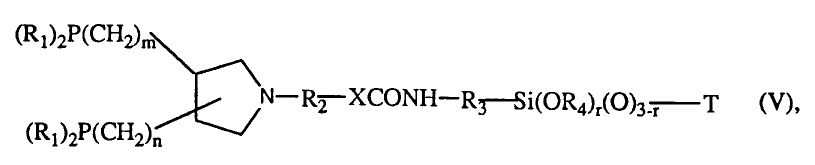 worin R₁, R₂, R₃, R₄, X, T, m, n und r die in Anspruch 10 angegebenen Bedeutungen haben.

19. Verwendung des festen Trägermaterials der Formeln IV und IVa gemäss Anspruch 10 als heterogene Katalysatoren zur asymmetrischen Hydrierung von prochiralen Verbindungen mit Kohlenstoff- oder Kohlenstoff-/Heteroatomdoppelbindungen.

20. Verwendung gemäss Anspruch 19 zur Hydrierung von unsymmetrischen Kohlenstoffdoppelbindungen, Ketiminen und Ketonen.

21. Verfahren zur asymmetrischen Hydrierung von Verbindungen mit Kohlenstoff- oder Kohlenstoff-/Heteroatomdoppelbindungen, dadurch gekennzeichnet, dass man die Verbindungen bei einer Temperatur von -20 bis 80 °C und einem Wasserstoffdruck von 10⁵ bis 10⁷ Pa in Gegenwart katalytischer Mengen eines festen Trägermaterials der Formeln IV oder IVa gemäss Anspruch 10 hydriert.

## Claims

1. A compound of formula I 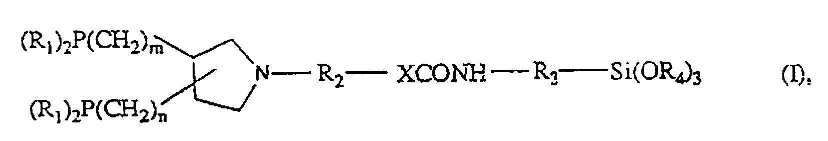 wherein the groups (R₁)₂P(CH₂)_{m and n} are in o- or m-position to each other and the substituents R₁ are identical or different radicals, m and n are each independently of the other 0 or 1, R₁ is linear or branched C₁-C₁₂alkyl, unsubstituted C₅-C₆cycloalkyl or C₅-C₆cycloalkyl which is substituted by C₁-C₄alkyl or C₁-C₄alkoxy, or is phenyl or benzyl, or both substituents R₁ in a group (R₁)₂P together are o,o' -diphenylene, -R₂-X-is a bond or -(CₓH₂ₓ-O)_{y}-, or X is -O- and R₂ is C₁-C₆alkylene, x is an integer from 2 to 6 and y is a number from 2 to 6, R₃ is C₂-C₁₈alkylene, phenylene or benzylene, and R₄ is C₁-C₆alkyl or phenyl.

2. A compound according to claim 1, wherein in formula I the sum of m+n is 0 or 1.

3. A compound according to claim 1, wherein R₁ in formula I is phenyl.

4. A compound according to claim 1, wherein in formula I -R₂-X- is a bond.

5. A compound according to claim 1, wherein in formula I R₃ is linear or branched C₂-C₁₂alkylene.

6. A compound according to claim 1, wherein in formula I R₄ is methyl or ethyl.

7. A compound according to claim 1 which is in the form of one of the optically active isomers, with respect to the position of the phosphine(methyl) groups.

8. A compound according to claim 1, wherein in formula I R₁ is phenyl and -R₂X- is a bond, R₃ is 1,3-propylene and R₄ is methyl or ethyl, and m is 0 and n is 1, and the groups (R₁)₂P- and (R₁)₂PCH₂- are attached in m-position, or m and n are each 0 and the groups (R₁)₂P- are attached in o-position.

9. A process for the preparation of a compound of formula I according to claim 1, which comprises reacting a compound of formula II
(R₄O)₃Si-R₃-NCO (II),
wherein R₃ and R₄ are defined in claim 1, with a compound of formula III 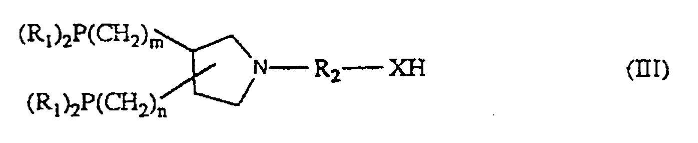 wherein R₁, R₂, X, m and n are as defined in claim 1.

10. A solid carrier material which contains a diphosphine rhodium or iridium complex attached on the surface, which material has the formulae IV and IVa 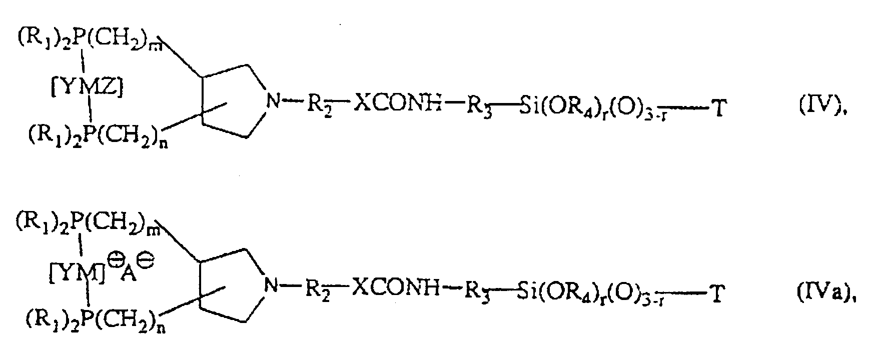 wherein Y denotes two monoolefin ligands or one diene ligand, M is Ir(I) or Rh(I), Z is -Cl, -Br or -I, A^{⊖} is the anion of an oxy acid or complex acid, T is a solid carrier material, r is 0, 1 or 2, and R₁, R₂, R₃, R₄, X, m and n are as defined in claim 1.

11. A carrier material according to claim 10, wherein Y in formulae IV and IVa is 1,5-hexadiene, 1,5-cycloactadiene or norbornadiene.

12. A carrier material according to claim 10, wherein Z in formula IV is -Cl or -Br.

13. A carrier material according to claim 10, wherein A^{⊖} in formula IVa is ClO₄^{⊖}, CF₃SO₃^{⊖}, BF₄^{⊖}, B(phenyl)₄^{⊖}, PF₆^{⊖}, SbCl₆^{⊖}, AsF₆^{⊖} or SbF₆^{⊖}.

14. A carrier material according to claim 10 which is a silicate, a semimetal oxide or a metal oxide.

15. A carrier material according to claim 14 which is a powder.

16. A carrier material according to claim 14, wherein the carrier T in formulae IV and IVa is a silica gel, an aerosil, an alumina, a titanium oxide or a mixture thereof.

17. A process for the preparation of a solid carrier material of formulae IV and IVa according to claim 10, which comprises reacting a solid carrier material which contains diphosphines attached on the surface and has the formula V 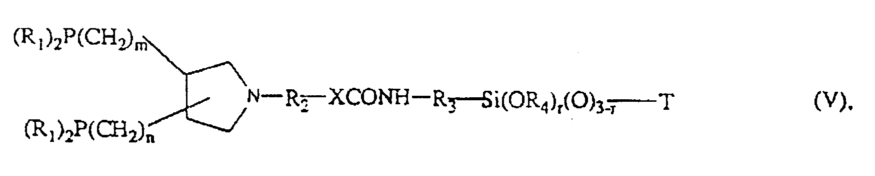 wherein R₁, R₂, R₃, R₄, X, T, m, n and r are as defined in claim 9, with a metal compound of formula [M(Y)Z]₂ or M(Y)₂^{⊕}A^{⊖}, wherein M, Y, Z and A^{⊖} are as defined in claim 10.

18. A solid modified carrier material of formula V 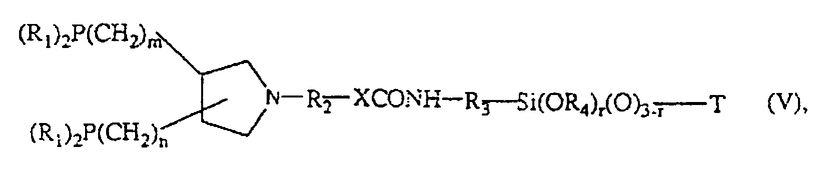 wherein R₁, R₂, R₃, R₄, X, T, m, n and r are as defined in claim 10.

19. Use of the solid carrier material of formulae IV and IVa as claimed in claim 10 as heterogeneous catalyst for the asymmetrical hydrogenation of prochiral compounds containing carbon double bonds or carbon/heteroatom double bonds.

20. Use according to claim 19 for hydrogenating unsymmetrical carbon double bonds, ketimines and ketones.

21. A process for the asymmetrical hydrogenation of compounds containing carbon double bonds or carbon/heteroatom double bonds, which comprises hydrogenating the compounds at a temperature of from -20 to 80°C and under a hydrogen pressure of from 10⁵ to 10⁷ Pa in the presence of catalytic amounts of a solid carrier material of formulae IV or IVa according to claim 10.

## Revendications

1. Composés de formule I 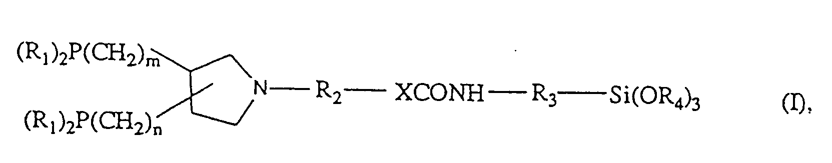 dans laquelle les groupes (R₁)₂P(CH₂) _{(m ou n)} se trouvent en position ortho ou méta l'un par rapport à l'autre et les R₁ représentent des restes identiques ou différents, m et n, indépendamment l'un de l'autre, signifient 0 ou 1, R₁ se trouve être un alkyle en C₁-C₁₂, linéaire ou ramifié, un benzyle, un phényle ou un cycloalkyle en C₅ ou C₆ non substitué ou substitué par des alkyles en C₁-C₄ ou alcoxy en C₁-C₄, ou bien les deux R₁ dans un groupe (R₁)₂P se trouvent être ensemble un o,o'-diphénylène, -R₂-X- représente une liaison ou un -(CₓH₂ₓ-O)_{y}- ou bien X signifie -O- et R₂ signifie un alkylène en C₁-C₆, x se trouve être un nombre entier compris entre 2 et 6 et y se trouve être un nombre compris entre 2 et 6, R₃ représente un alkylène en C₂-C₁₈, un phénylène ou un benzylène, et R₄ signifie un alkyle en C₁-C₆ ou un phényle.

2. Composés selon la revendication 1, dans lesquels, dans la formule I, la somme m + n est de 0 ou 1.

3. Composés selon la revendication 1, dans lesquels, R₁ dans la formule I se trouve être un phényle.

4. Composés selon la revendication 1, dans lesquels, dans la formule I, -R₂-X- se trouve être une liaison.

5. Composés selon la revendication 1, dans lesquels, dans la formule I, R₃ représente un alkylène en C₂-C₁₂, linéaire ou ramifie.

6. Composés selon la revendication 1, dans lesquels, dans la formule I, R₄ signifie un méthyle ou un éthyle.

7. Composés selon la revendication 1, caractérisés en ce qu'ils se trouvent sous la forme des isomères optiquement actifs, ceci par rapport à la position des groupes phosphine-(méthyle).

8. Composés selon la revendication 1, dans lesquels, dans la formule I, R₁ représente un phényle et -R₂X- représente une liaison, R₃ signifie un 1,3-propylène et R₄ signifie un méthyle ou un éthyle, m se trouve être 0 et n 1 et les groupes (R₁)₂P- et (R₁)₂PCH₂- sont liés dans une position méta, ou m et n se trouvent être 0 et les groupements (R₁)₂P- se trouvent être en position ortho.

9. Procédé de préparation de composés de formule I selon la revendication 1, caractérisé en ce qu'on fait réagir un composé de formule II
(R₄O)₃Si-R₃-NCO (II),
dans laquelle R₃ et R₄ ont les significations données dans la revendication 1, avec un composé de formule III 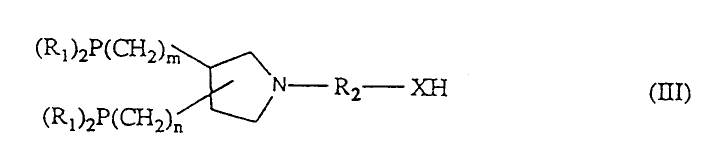 dans laquelle R₁, R₂, X, m et n ont les significations données dans la revendication 1.

10. Matériau support solide, qui contient, lié à la surface, des complexes chiraux diphosphine-rhodium ou diphosphine-iridium, caractérisé en ce qu'il correspond aux formules IV et IVa, 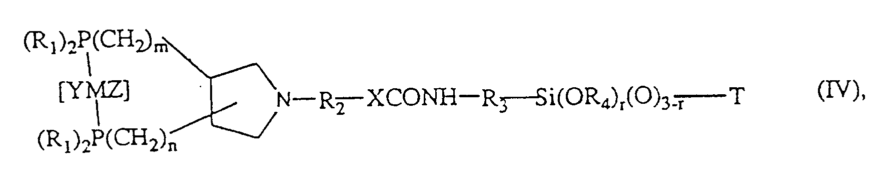 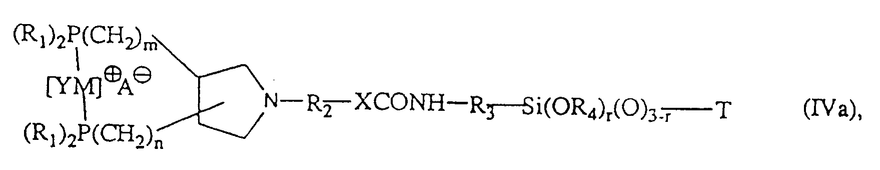 dans lesquelles Y se trouve être deux ligands mono-oléfiniques ou un ligand diènique, M signifie Ir(I) ou Rh(I), Z représente -Cl, -Br ou -I, A^{⊖} est l'anion d'un acide oxygéné ou d'un acide complexe, T se trouve être un matériau de support solide, r représente 0, 1 ou 2 et R₁, R₂, R₃, R₄, X, m et n ont les significations données dans la revendicaton 1.

11. Matériau support selon la revendication 10, dans lequel Y, dans les formules IV et IVa, se trouve être un 1,5-hexadiène, un 1,5-cyclooctadiène ou un norbornadiène.

12. Matériau de support selon la revendication 10, dans lequel Z, dans la formule IV, se trouve être un -Cl ou un -Br.

13. Matériau support selon la revendication 10, dans lequel A^{⊖}, dans la formule IVa, se trouve être de préférence ClO₄^{⊖}, CF₃SO₃^{⊖}_{,} BF₄^{⊖}, B(phényl)₄^{⊖}_{,} PF₆^{⊖}, SbCl₆^{⊖}, AsF₆^{⊖} ou SbF₆^{⊖}.

14. Matériau de support selon la revendication 10, dans lequel il s'agit d'un support à base d'un silicate ou d'un oxyde de métalloïde ou de métal.

15. Matériau de support selon la revendication 14, caractérisé en ce qu'il s'agit d'une poudre.

16. Matériau de support selon la revendication 14, caractérisé en ce qu'il s'agit, à propos du support T dans les formules IV et IVa, d'un gel de silice, d'un Aerosil, d'un oxyde d'aluminium, d'un oxyde de titane ou de leurs mélanges.

17. Procédé de préparation d'un matériau de support solide de formules IV et IVa selon la revendication 10, caractérisé en ce que on fait réagir un matériau support solide, qui contient des diphosphines liées sur la surface et qui correspond à la formule V, 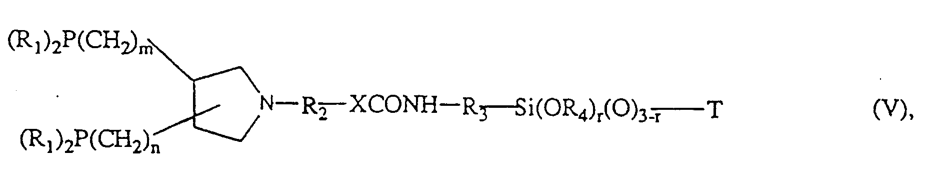 dans laquelle R₁, R₂, R₃, R₄, X, T, m, n et r ont les significations données dans la revendication 9, avec un composé métallique de formule [M(Y)Z]₂ ou M(Y)₂^{⊕}A^{⊖}, dans lesquels M, Y, Z et A^{⊖} ont les significations données dans la revendication 10.

18. Matériau de support solide modifié de formule V 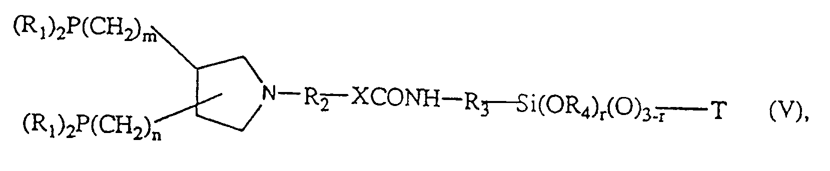 dans laquelle R₁, R₂, R₃, R₄, X, T, m, n et r ont les significations données dans la revendication 10.

19. Utilisation du matériau de support solide de formules IV et IVa selon la revendication 10 en tant que catalyseur hétérogène pour hydrogénation asymétrique de composés prochiraux ayant des doubles liaisons carbonées ou des doubles liaisons carbone/hétéroatome.

20. Utilisation selon la revendication 19 afin d'hydrogéner des doubles liaisons carbonées, des cétimines et des cétones asymétriques.

21. Procédé d'hydrogénation asymétrique de composés ayant des doubles liaisons carbonées ou des doubles liaisons carbone/hétéroatome caractérisé en ce qu'on hydrogène les composés à une température comprise entre -20 et 80°C et à une pression d'hydrogène comprise entre 10⁵ et 10⁷ Pa en présence d'une quantité catalytique d'un matériau de support solide de formule IV ou IVa conformes à la revendication 10.
